# EUROPEAN PATENT SPECIFICATION

(11) **EP 1 929 721 B1**
(45) Date of publication and mention of the grant of the patent: **27.10.2010**
(21) Application number: 05799544.1
(22) Date of filing: 29.09.2005
(51) Int. Cl.: H04L 12/58, G06Q 10/00, H04L 29/06

(54) **METHOD AND SYSTEM PROVIDING ASYNCHRONOUS COMMUNICATIONS OVER THE INTERNET**
VERFAHREN UND SYSTEM ZUR BEREITSTELLUNG ASYNCHRONER KOMMUNIKATION ÜBER DAS INTERNET
PROCEDE ET SYSTEME PERMETTANT DES COMMUNICATIONS ASYNCHRONES SUR INTERNET

(43) Date of publication of application: 11.06.2008
(73) Proprietor: Teamon Systems, Inc., Issaquah, Washington 98027 (US)
(72) Inventor: CLARKE, David, James, Redmond, WA 98053-2049 (US)
(74) Representative: Roberts, Gwilym Vaughan
(86) International application number: PCT/US2005/035053
(87) International publication number: WO 2007/043992

(56) References cited:
- EP-A- 0 994 608
- GB-A- 2 351 573
- US-A1- 2005 036 498
- ROYER INET-CONSULTING D: "IMAP-PROXY service for mobile clients to do submitting and forwarding draft-royer-lemonade-submit-00; draft-royer-lemonade-submit-00.txt" IETF STANDARD-WORKING-DRAFT, INTERNET ENGINEERING TASK FORCE, IETF, CH, 14 June 2003 (2003-06-14), XP015005114 ISSN: 0000-0004
- CRISPIN UNIVERSITY OF WASHINGTON M: "INTERNET MESSAGE ACCESS PROTOCOL - VERSION 4rev1; rfc2060.txt" IETF STANDARD, INTERNET ENGINEERING TASK FORCE, IETF, CH, 1 December 1996 (1996-12-01), XP015007844 ISSN: 0000-0003
- ROYER INET-CONSULTING D: "IMAP-PROXY service for mobile clients to do submitting and forwarding draft-royer-lemonade-submit-00; draft-royer-lemonade-submit-00.txt" IETF STANDARD-WORKING-DRAFT, INTERNET ENGINEERING TASK FORCE, IETF, CH, 14 June 2003 (2003-06-14), XP015005114 ISSN: 0000-0004
- CRISPIN UNIVERSITY OF WASHINGTON M: "INTERNET MESSAGE ACCESS PROTOCOL - VERSION 4rev1; rfc2060.txt" IETF STANDARD, INTERNET ENGINEERING TASK FORCE, IETF, CH, 1 December 1996 (1996-12-01), XP015007844 ISSN: 0000-0003
- WAP FORUM: "WAP WSP: Wireless Application Protocol - Wireless Session Protocol Specification" INTERNET CITATION, [Online] Retrieved from the Internet: URL:http://www1.wapforum.org/tech/document s/WAP-203-WSP-20000504-a.pdf> [retrieved on 2003-09-29]

## Description

### Field of the Invention

The present invention relates to the field of communications systems, and, more particularly, to electronic mail (email) communications systems and related methods.

### Background of the Invention

Electronic mail (email) has become an integral part of business and personal communications. As such, many users have multiple email accounts for work and home use. Moreover, with the increased availability of mobile cellular and wireless local area network (LAN) devices that can send an receive emails, many users wirelessly access emails stored in source mailboxes of different email storage servers (e.g., corporate email storage server, Yahoo, Hotmail, AOL, etc.).

Yet, email distribution and synchronization across multiple mailboxes and over wireless networks can be quite challenging, particularly when this is done on a large scale for numerous users. For example, different email accounts may be configured differently and with non-uniform access criteria. Moreover, as emails are received at the wireless communications device, copies of the emails may still be present in the original mailboxes, which can make it difficult for users to keep their email organized.

One particularly advantageous "push" type email distribution and synchronization system is disclosed in U.S. Patent No. 6,779,019 to Mousseau et al., which is assigned to the present Assignee. This system is for pushing user-selected data items from a host system to a user's mobile data communication device upon detecting the occurrence of one or more user-defined event triggers. The user may then move (or file) the data items to a particular folder within a folder hierarchy stored in the mobile data communications device, or may execute some other system operation on the data item. Software operating at the mobile device and the host system then synchronizes the folder hierarchy of the mobile device with a folder hierarchy of the host system, and any actions executed on the data items at the mobile device are then automatically replicated on the same data items stored at the host system, thus eliminating the need for the user to manually replicate actions at the host system that have been executed at the mobile data communication device.

The foregoing system advantageously provides great convenience to users of wireless email communication devices for organizing and managing their email messages.

US 2005036498 discloses a communications system which may include a plurality of data storage devices each using at least one of a plurality of different operating protocols, and a plurality of mobile wireless communications devices for accessing the plurality of data storage devices. Each mobile wireless communications device may also use at least one of the plurality of different operating protocols. The system may further include a protocol interface device. In particular, the protocol interface device may include a protocol engine module for communicating with the plurality of data storage devices using respective operating protocols, and a front-end proxy module coupled to the protocol engine. The front-end proxy module may include a respective proxy module for communicating with the plurality of mobile wireless communications devices using each different operating protocol, and at least one common core service module connected to the proxy modules.

Royer D, "IMAP-PROXY service for mobile clients to do submitting and forwarding", drafter-royer-lemonade-submit-00, IETF, 13 December 2003 describes a method that allows mobile clients to use the IMAP protocol and submit messages to a IMAP-PROXY service that understands [E]SMTP and IMAP.

Crispin, M, "INTERNET MESSAGE ACCESS PROTOCOL - VERSION 4rev1, RFC2060, IETF, December 1996 specifies an internet standards track protocol for the Internet community The Internet Message Access Protocol, version 4rev1 allows a client to access and manipulate electronic mail messages ona server. The protocol permits manipulation of remote message folders - "mailboxes" - in a way that is functionally equivalent to local mailboxes.

Yet, further convenience and efficiency features may be desired in email distribution and synchronization systems as email Usage continues to grow in popularity.

### Brief Description of the Drawings

FIG. 1 is schematic block diagram of a direct access electronic mail (email) distribution and synchronization system in accordance with the present invention.

FIG. 2 is a schematic block diagram of an exemplary embodiment of user interface components of the direct access proxy of the system of FIG. 1.

FIG. 3 is a schematic block diagram of an exemplary embodiment of the Web client engine of the system of FIG. 1.

FIGS. 4 is a schematic block diagram of an exemplary embodiment of the mobile office platform engine machine for use in the system of FIG. 1.

FIG. 5 is a schematic block diagram of an exemplary embodiment of the database module of the system of FIG. 1.

FIG. 6 is a sequence diagram illustrating an asynchronous communication approach for communicating between the Web client engine and mobile office platform of FIG. lover the Internet.

FIGS. 7 and 8 are flow diagrams illustrating asynchronous communication methods for communicating between the Web client engine and mobile office platform of FIG. lover the Internet.

FIG. 9 is a schematic block diagram illustrating exemplary components of a mobile wireless communications device for use with the present invention.

### Summary of the invention

The invention relates to systems according to claims 1, 10 and 14 and to a method according to claim 18. Preferred embodiments are set forth in the dependent claims.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternate embodiments.

The present description is directed to a communications system and, more particularly, to a direct access electronic mail system. The communications system may generally be summarized as including a client device for generating email processing jobs, and a proxy server communicating asynchronously over the Internet with the client device for processing the email processing jobs. The client device may post a given email processing job to the proxy server with a unique job identifier (ID), and the proxy server thereafter may post job results for the given email processing job to the client device also with the unique job ID. Moreover, the client device may also advantageously post at least one other email processing job to the proxy server over the Internet in a time between posting the given email processing job and receiving the job results therefor.

Because the client device and the proxy server communicate asynchronously with one another, the client device need not wait for a response to its request to process the given processing job before posting another job(s). This provides enhanced efficiency since the client device is able to generate and process other new jobs without having to wait on the proxy server. Yet, since the proxy server has a unique ID to identify each job, it is therefore able to respond to the client device with the job results when they are available in such a way that the client device can recognize which job the results are associated with and act accordingly.

In accordance with another advantageous aspect, the client device may also generate and post calendar processing jobs to the proxy server, and the proxy server may processes and post results for the calendar processing jobs to the client device. Similarly, the client device may also generate and post address book and/or document retrieval processing jobs to the proxy server, and the proxy server may processes and post results therefor to the client device.

In particular, the client device and the proxy server may communicate asynchronously over the Internet at a physical layer. Furthermore, the client device may post the given email processing job to the proxy server using a Web Distributed Authoring and Versioning (WebDAV) protocol. Also, the client device may post the given processing job to a request hypertext transport protocol (HTTP) address, and the proxy server may post the job results for the given processing job to a response HTTP address different than the request HTTP address.

The communications system may further include at least one wireless handheld communications device cooperating with the client device to generate the email processing jobs. Moreover, the proxy server may include a queue for storing processing jobs posted by the client device prior to processing. In addition, the proxy server may generate an acknowledgement to the client device upon receiving the posted given processing job, and the client device may similarly generate an acknowledgement to the proxy server upon receiving the posted job results for the given processing job.

A related communications method aspect may include generating email processing jobs at a client device, and posting a given email processing job from the client device to a proxy server over the Internet with a unique job identifier (ID). The method may further include processing the given email processing job at the proxy server and posting job results for the given email processing job to the client device over the Internet also with the unique job ID. Also, at least one other email processing job may be posted from the client device to the proxy server over the Internet in a time between posting the given email processing job and receiving the job results therefor.

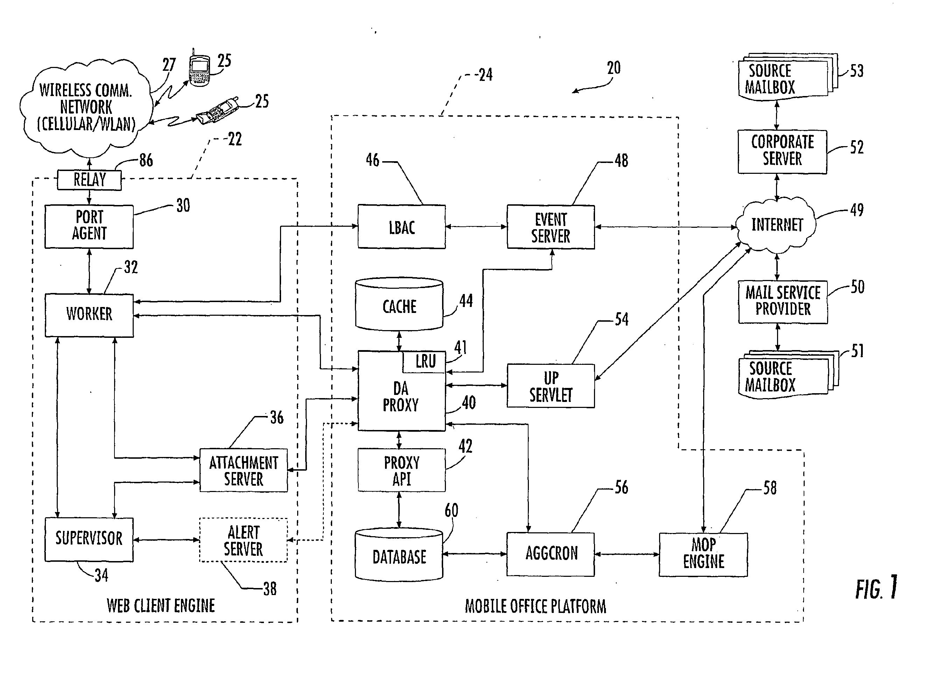

Referring initially to FIG. 1, a direct access (DA) email distribution and synchronization system **20** allows direct access to different mail sources, allowing messages to be transferred directly to a mobile wireless handheld device from a source mailbox. As a result, different mail stores need not be used for integrated external source mail accounts, and a permanent copy of an email in a local email store is not required.

Although this diagram depicts objects as functionally separate, such depiction is merely for illustrative purposes. It will be apparent to those skilled in the art that the objects portrayed in this figure can be arbitrarily combined or divided into separate software, firmware or hardware components. Furthermore, it will also be apparent to those skilled in the art that such objects, regardless of how they are combined or divided, can execute on the same computing device or can be arbitrarily distributed among different computing devices connected by one or more networks.

The direct access system **20** enables email users or subscribers to have email from third-party email services pushed to various mobile wireless communications devices **25.** Users need not create a handheld email account to gain direct access to an existing external email account. The direct access system **20** may operate without performing aggregation as used in some prior art systems, in which emails are aggregated from multiple different source mailboxes to a single target mailbox. In other words, email need not be stored in an intermediate target mailbox, but instead may advantageously be accessed directly from a source mail store.

As illustrated in FIG. 1, the direct access system **20** illustratively includes a Web client (WC) engine **22** and a mobile office platform (MOP) **24.** These Web client engine **22** and mobile office platform **24** operate together to provide users with direct access to their email from mobile wireless communications devices 25 via one or more wireless communications networks **27,** for example. Both the Web client engine **22** and the mobile office platform **24** may be located at the same location or at separate locations, and implemented in one or more servers. The web client engine **22** illustratively includes a port agent **30** for communicating with the wireless communications devices **25** via the wireless communications network(s) **27,** a worker **32,** a supervisor **34,** and an attachment server **36,** which will be discussed further below. An alert server **38** is shown in dashed lines, and in one preferred embodiment, is not used, but could be part of the system in yet other embodiments.

The mobile office platform **24** illustratively includes a DA proxy **40,** and a proxy application programming interface (API) **42** and a cache **44** cooperating with the DA proxy. The mobile office platform **24** also illustratively includes a load balance and cache (LBAC) module **46,** an event server **48,** a universal proxy (UP) Servlet **54,** an AggCron module **56,** a mobile office platform (MOP) engine **58,** and a database (DB) engine **60,** which will be discussed in further detail below. The Least Recently Used (LRU) cache **41** caches new messages, and can release messages and objects that were least recently used.

The supervisor **34** processes new mail notifications that it receives from the direct access proxy **40.** It then assigns a job, in the form of a User Datagram Protocol (UDP) packet, to the least-loaded worker **32,** according to the most recent UDP heartbeat the supervisor **34** has received. For purposes of this description, heartbeat is a tool that monitors the state of the server. Additionally, the supervisor **34** will receive a new service book request from the direct access proxy **40** to send service books to the mobile wireless communication device for new or changed accounts. A service book can be a class that could contain all service records currently defined. This class can be used to maintain a collection of information about the device, such as connection information or services, such as an email address of the account.

The worker **32** is an intermediary processing agent between the supervisor **34** and the port agent **30,** and responsible for most processing in the Web client engine **22.** It will retrieve e-mail from a universal proxy **54,** via a direct access proxy, and format e-mail in Compressed Multipurpose Internet Mail Extension (CMIME) as a type of Multipurpose Internet Mail Extension, and send it to the port agent **30,** for further processing. Its responsibilities include the following tasks: (1) messages sent to and received from the handheld; (2) message reply, forward and more requests; (3) Over-The-Air Folder Management operation (OTAFM); (4) attachment viewing; and (5) service book.

The port agent **30** acts as a transport layer between the infrastructure and the rest of the Web client engine **22.** It is responsible for delivering packets to and from the mobile wireless communications device. To support different integrated mailboxes with one device, more than one service book can be used, and each service book can be associated with one integrated mailbox. A port agent **30** can include one Server Relay Protocol (SRP) connection to a relay, but it can also handle multiple SRP connections, and each connection may have a unique Globally Unique Identifier (GUID) associated with a service book. The attachment server **36** provides service for document/attachment conversion requests from workers **32.**

The direct access proxy **40** provides a Web-based Distributed Authoring and Versioning (WebDAV) interface that is used by the worker 32 to access account and mailbox information. This provides functionality to create, change and move documents on a remote server, e.g., a Web server. The direct access proxy **40** typically will present an asynchronous interface to its clients. The LBAC module **46** is used by a notification server and the Web client engine **22** components to locate the proper DA proxy for the handling of a request. The universal proxy Servlet **54** abstracts access to disparate mail stores into a common protocol. The event server **48** responds to notifications of new messages from corporate servers **52** and/or mail service providers **50,** which may be received via the Internet **40,** for example. The notifications are communicated to the direct access proxy **40** by the AggCron module 56 and the event server **48** so that it may initiate checking for new mail on source mailboxes **51, 53** of the mail service providers **50** and/or corporate servers **52.** The proxy API can be a Simple Object Access Protocol (SOAP) Daemon **42** and is the primary interface with a database **60,** which is the primary data store for the mobile office platform **24.** The AggCron module **56** may also periodically initiate polling for new messages as well.

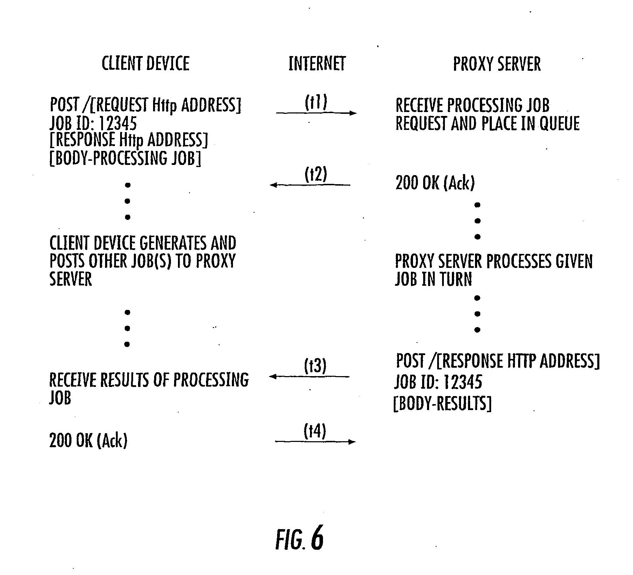

Turning additionally to FIGS. 6-8, the asynchronous communication interface between the DA proxy **40** and worker **32** is now further described. Beginning at Block **200,** the worker **32** generates email processing jobs for the DA proxy **40,** at Block **202,** in response to the wireless devices **25,** the supervisor **34,** etc. At a time **t1,** the worker **32** initiates a first connection with the DA proxy **40** and posts a given email processing job to the DA proxy over the Internet with a unique job identifier (ID), at Block **204, 204'.** In the illustrated example, the unique job ID is "12345," and the given email job is posted to an HTTP request receiving address associated with the DA proxy **40.**

The given email job generated by the worker **32** also includes a response HTTP address associated with the worker to which the DA proxy **40** will post the job results, as well as the requisite components of the job to be performed by the DA proxy in a body of the job, as shown in FIG. 6. It should be noted that the response HTTP address need not be included in the job request in all embodiments. For example, the DA proxy **40** may store one or more response HTTP addresses that is uses for responding to particular jobs or clients, for example. That is, the DA proxy already knows ahead of time what address it is to send job results to based upon the particular type of job and/or the particular client device that posts the job.

When the DA proxy **40** receives the given email processing job it may optionally send an acknowledgement (ack) to the DA proxy **40** at a time **t2** indicating that the job was successfully posted, at Block **212'.** In the illustrated example, the ack is a "200 OK" command, but other ack commands may be used in other embodiments. The ack may either serve to end the first connection between the worker **32** and the DA proxy **40,** or simply signify the end of the "transaction" of posting the job while leaving the first connection open. Leaving the first connection open may be more efficient in cases where numerous jobs are to be posted to the DA proxy, for example.

The DA proxy **40** processes the given email job, as discussed further below, and upon completing the job at a time **t3** initiates a second connection with the worker **32** different than the first connection and posts job results to the worker at the designated response HTTP address also with the unique job ID, at Block **208, 208'.** The results of the email processing job are included in a body of the results message, as shown. Once the worker 32 receives the results of the given email processing job, it may optionally send an ack to the DA proxy **40** acknowledging receipt thereof at a time **t4** (Block **214'**), thus concluding the illustrated method (Block **210).** Here again, the ack may either serve to end the second connection between the worker **32** and the DA proxy **40,** or simply signify the end of the transaction of posting the job results while leaving the second connection open for posting results for other jobs, for example.

The unique job ID advantageously allows the worker **32** to match the results for the given email job to the original job post. In this way, the worker **32** may advantageously post one or more other email processing jobs to the DA proxy **40** over the Internet in a time between posting the given email processing job and receiving the job results therefor, i.e., between times **t2** and **t3,** at Block **206.** This advantageously increases the efficiency of the worker **32** as it does not have to put later email processing jobs on hold while awaiting results for a pending job from the DA proxy **40.**

Because the worker **32** and the DA proxy **40** communicate asynchronously with one another (i.e., not posting jobs and results therefor over the same connection), the worker need not wait for a response to its request to process the given processing job before posting another job(s). This provides enhanced efficiency since the worker **32** is able to generate and process other new jobs without having to wait on the DA proxy **40.** Yet, since the DA proxy **40** has a unique ID to identify each job, it is therefore able to respond to the given worker **32** with the job results when they are available in such a way that the worker can recognize which job the results are associated with and act accordingly. The DA proxy **40** stores pending jobs in the cache **44.**

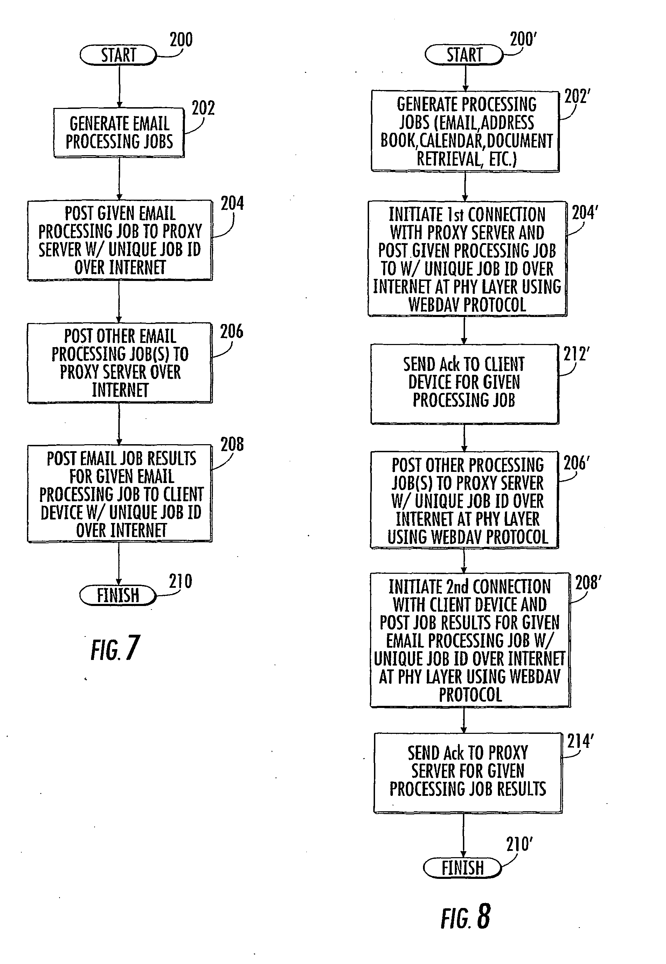

As further illustrated in FIG. 8, the worker **32** may generate, and the DA proxy **40** may process, other types of processing jobs besides email processing jobs. As noted briefly above, the worker **32** may generate and post calendar, address book and/or document retrieval processing jobs to the DA proxy **40,** as well as other types of jobs, and the DA proxy processes and posts results therefor to the client device as similarly described above for the email processing jobs. For example, a calendar or address book processing job may include adding/deleting/updating a calendar or address entry on a user's desktop computer calendar or address book (e.g., a Microsoft Outlook calendar/address book, for example). A document retrieval job may include fetching a desired document for a user from his desktop computer or other location on a network, as will be appreciated by those skilled in the art.

The asynchronous communications between the worker **32** and the DA proxy **40** occur at a physical (PHY) network layer, as will be appreciated by those skilled in the art. Furthermore, the worker **32** and the DA proxy **40** may advantageously post requests/responses to one another using a WebDAV protocol, as noted briefly above, although other suitable protocols may also be used.

The LBAC module **46** is used by a notification server and the Web client engine **22** components to locate the proper DA proxy for the handling of a request. The universal proxy servelet **54** abstracts access to disparate mail stores into a common protocol. The event server **48** responds to notifications of new messages from corporate servers **52** and/or mail service providers **50,** which may be received via the Internet **40,** for example. The notifications are communicated to the Web client engine **22** by the AggCron module **56** so that it may initiate checking for new mail on source mailboxes **51, 53** of the mail service providers **50** and/or corporate servers **52.** The proxy API (SOAP Daemon) **42** is the primary interface with a database **60,** which is the primary data store for the mobile office platform **24.** The AggCron module 56 may also periodically initiate polling for new messages as well.

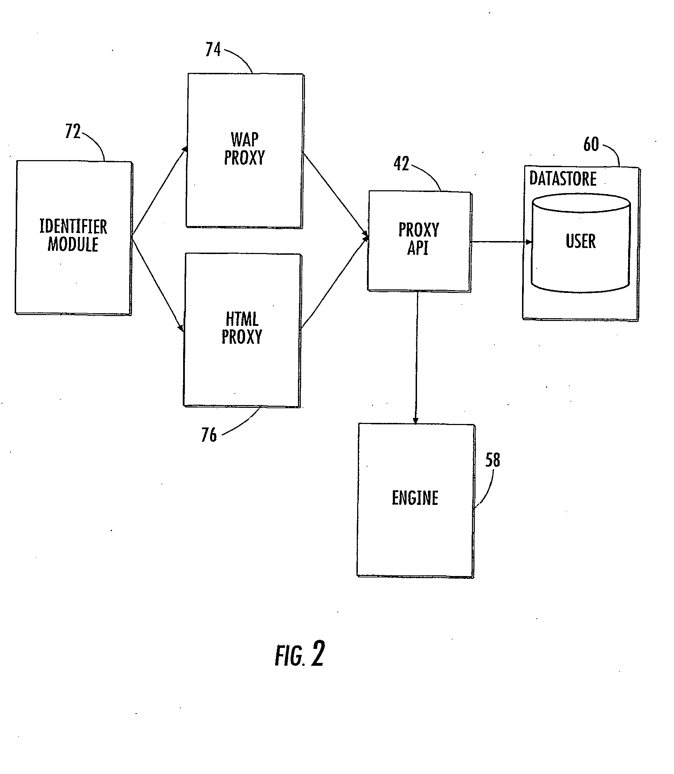

FIG. 2 is a high-level block diagram showing user interface components of the direct access proxy **40.** More particularly, the direct access proxy **40** illustratively includes an identifier module **72** with various downstream proxy modules for different communication formats, such as a Wireless Application Protocol (WAP) proxy module **74** and a Hypertext Markup Language (HTML) proxy module **76.** Of course, it will be appreciated by those skilled in the art that other types of proxy modules for other communications formats may also be used.

The identifier module **72** provides a centralized authentication service for the direct access system 20 and other services. An authentication handshake may be provided between an ID service and direct access system **20** to ensure that users have the proper credentials before they are allowed access to the direct access system **20.** The ability to switch from managing a Web client to a direct access system, or vice versa, may occur without requiring the user to re-enter any login credentials. Any Web client and direct access may share session management information on behalf of a user.

The WAP proxy **74** provides a wireless markup language (WML)-based user interface for configuring source mailboxes with the mobile office platform **24.** The HTML proxy **76** provides an HTML-based user interface for configuring of source mailboxes in the MOP **24.** The proxy API **42** (SOAP Daemon) is the primary interface with the database **60.** The engine **58** is a protocol translator that connects to a source mailbox to validate configuration parameters. The database **60** is the primary user data store for the mobile office platform **24.**

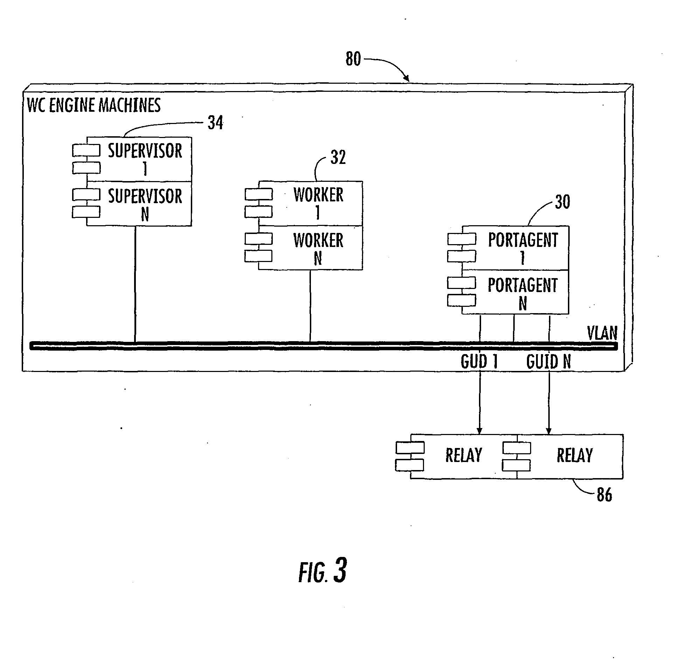

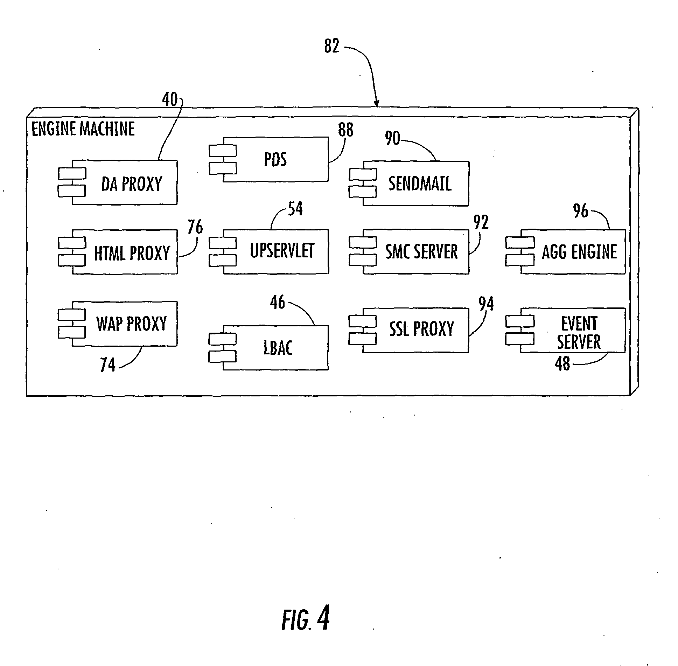

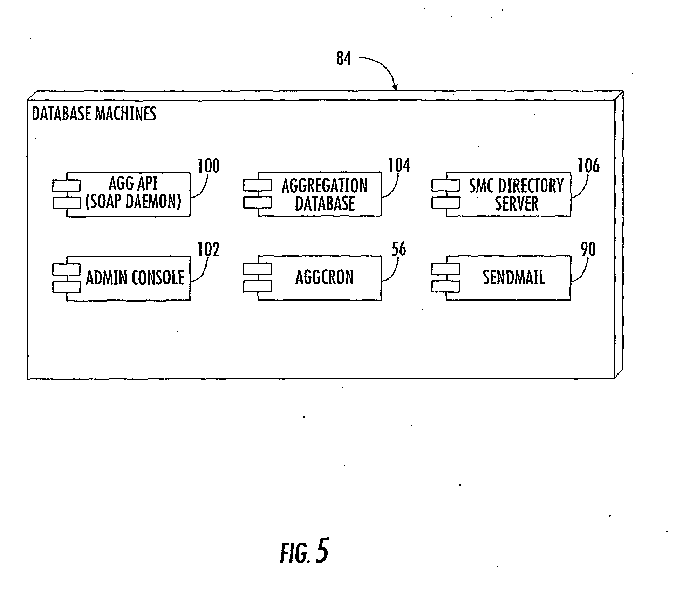

FIGS. 3, 4 and 5 illustrate respective Web client engine machines **80** (FIG. 3), an engine machine **82** (FIG. 4), and database machine **84** (FIG. 5). The Web client engine machine **80** illustratively includes the supervisors **34,** workers **36,** and port agents **38.** Relays **86** cooperate with the port agents **38** using a GUID.

The engine machine **82** illustratively includes a direct access proxy **40,** HTML proxy **76,** WAP proxy **74,** PDS module **88,** UP Servlet **54,** LBAC module **46,** a send-mail module **90,** an secure mail client (SMC) server **92,** a secure sockets layer (SSL) proxy **94,** an aggregation engine **96,** and event server **48.** The SMC server **92** cooperates with corresponding SMC modules resident on certain corporate networks, for example, to convey email data between the mobile office platform **24** and source mailboxes. The database machine **84** may include an aggregation application programming interface (API) **100** as a SOAP Daemon, an administration console **102,** an aggregation database **104,** the AggCron module **56,** an SMC directory server **106,** and a send mail module **90.**

The various components of the Web client engine **22** may be configured to run on different machines or servers. The component binaries and configuration files may either be placed in a directory on the network or placed on a local disk that can be accessed to allow the appropriate components to run from each machine. In accordance with one exemplary implementation, deployment may include one supervisor, two workers, and one port agent for supporting 30,000 external source mailboxes, although other configurations may also be used. Actual production deployment may depend on the results of load, performance and stress testing, as will be appreciated by those skilled in the art.

For the mobile office platform **24** direct access components, modules and various functions, machines are typically installed in two configurations, namely engine machines (FIG. 4) and database machines (FIG. 5). While these machines may have all of the above-described components installed on them, not all of these components need be active in all applications (e.g., aggregation may be used with systems that do not support push technology, etc.). Once again, actual production deployment may depend on the results of load, performance and tress testing.

The mobile office platform **24** architecture in one known technique advantageously uses a set of device/language-specific eXtensible Stylesheet Language (XSL) files, which transform application data into presentation information. In one non-limiting example, a build process takes a non-localized XSL file and generates a localized XSL file for each supported language. When the XSL file is used, it is "compiled" in memory and cached for repeated use. The purpose of pre-localizing and caching the templates is to reduce the CPU cycles required to generate a presentation page.

Branding may also be performed. Initially, a localized XSL file may build a WAP application to access aggregated email accounts. A WAP proxy application may be localizable and support multiple WAP devices. For each logical page of an application, a device-specific XSL file may be created, which may be localized for each language/country supported. This rendering scheme may support not only WAP devices, but also SMTP, HTML and POP proxies, for example. In branding, each page of a given application may be customized for each different brand.

The branding of a page may be accomplished through XSL file imports, including the use of a Java application.programming interface (API) for XML processing (JAXP) feature to resolve the imports dynamically. This need not require that each combined page/brand template be compiled and cached. By way of example, in a sample template directory, first and second pages for a single language/country may be combined with branded counterparts to generate a plurality of distinct template combinations. It is also possible to profile memory requirements of an application by loading templates for a single language, device/application and brand. An HTML device may include a set of templates that are large compared to other devices.

In one known technique, the mobile office platform **24** advantageously builds process and takes non-localized files and language-specific property files and combines them to make each non-localized XSL file into an XSL file for each supported language. A separate XSL file for each language need not be used, and the language factor may be removed from the memory usage equation. A JAXP API may be used to extend XSL file with Java classes. The extensions may take various forms, for example, including extension elements and extension functions. A template may be transformed by creating and initializing an extension object with a locale and passing an object to a transformer. The system can remove multiple imports and use less memory. HTML templates can use template importing to enable template reuse, much like Java classes, and reuse other Java classes through a mechanism like derivation or importing.

In the direct access system **20,** users receive email on their mobile wireless communications devices **25** from multiple external accounts, and when replying to a received message, the reply-to and sent-from address integrity is preserved. For example, for a user that has an integrated Yahoo! account (user@yahoo.com) and a POP3 account (user@pop3.com), if they receive an email at user@yahoo.com, their replies generated from the device **25** will appear to come from user@yahoo.com. Similarly, if a user receives an email at user@pop3.com, their replies will appear to come from user@pop3.com.

Selection of the "sent from" address is also available to a user that composes new messages. The user will have the ability to select the "sent from" address when composing a new message. Depending on the source mailbox type and protocol, the message may also be sent through the source mail service. This functionality can be supported by sending a configuration for each source mailbox, for example, as a non-limiting example, a service book for each source mailbox **51, 53** to the mobile wireless communications device **25.**

As noted above, a service book is a class that may include all service records currently defined. This class may be used to maintain a collection of information about the device, such as connection information. The service book may be used to manage HTTP connections and mail (CMIME) information such as account and hierachy. At mobile wireless communications devices **25,** a delete service book request may be sent when a source mailbox **51, 53** is removed from the account. The service book may also be resent to the device **25** with a viewable name that gives the user some indication that the selection is no longer valid.

A sent items folder may also be "synchronized." Any device-originated sent messages may be propagated to a source account and stored in a sent mail folder, for example. Also, messages deleted on the device **25** may correspondingly be deleted from the source mailbox **51, 53.** Another example is that device-originated marking of a message as read or unread on the device **25** may similarly be propagated to the source mailbox **51, 53.** While the foregoing features are described as source-dependent and synchronizing one-way, in some embodiments certain synchronization features may in addition, or instead, propagate from the source mailbox/account to the handheld device, as will be appreciated by those skilled in the art.

When available, the mail service provider or corporate mail server may be used for submission of outgoing messages. While this may not be possible for all mail service providers or servers, it is preferrably used when available as it may provide several advantages. For example, subscribers to AOL will get the benefit of AOL-specific features like parental controls. Furthermore, AOL and Yahoo users, as non-limiting examples, will see messages in their sent items folder, and messages routed in this manner may be more compliant with new spam policies such as Sender Policy Framework (SPF) and Sender Id. In addition, messages sent via corporate mail servers **52** will have proper name resolution both at the global address list level and the personal level. It should be understood, however, that the use of the mail service provider **50** to deliver mail may be dependant on partner agreements and/or protocol, depending upon the given implementation.

The architecture described above also advantageously allows for features such as on-demand retrieval of message bodies and attachments and multiple folder support. Morever, a "this-is-spam" button or indicator may be used allowing company labels and other service provider-specific features when supported by an underlying protocol, as will be appreciated by those skilled in the art.

One particular advantage of the direct access system **20** is that a user need not configure an account before integrating additional accounts. However, a standalone email address may be used, and this address advantageously need not be tied to a mailbox size which the subscriber is required to manage. For example, the email account may be managed by an administrator, and any mail could be purged from the system after a predetermined period of time (i.e., time-based auto-aging with no mailbox limit for all users).

Additionally, all aspects of any integrated email account creation, settings and options may advantageously be available to the user from their mobile wireless communications device **25** Thus, users need not visit an HTML site and change a setting, create a filter, or perform similar functions, for example. Of course, an HTML site may optionally be used.

As a system Internet email service with the direct access system **20** grows, ongoing emphasis may advantageously be placed on the administrative site to provide additional information to carrier administrators, support teams, and similar functions. However, in some instances a mail connector may be installed on a personal computer, and this functionality may not always be available from the mobile wireless communications device.

The Web client engine **22** may advantageously support different features including message to handheld (MTH), message from handheld (MFH), forward/reply a message, request to view more for a large message (e.g., larger than 2K), request viewing message attachment, and over the air folder management (OTAFM). These functions are explained below.

For an MTH function, each email account integrated for a user is linked with the user device through a Web client service book. For each new message that arrives in the Web client user mailbox; a notification that contains the new message information will typically be sent to a Web client engine supervisor component (FIG. 3), which in turn will assign the job to an available worker with the least load in the system. The chosen worker **32** will validate the user information and retrieve the new message from the user source mailbox and deliver it to the user device.

In an MFH function, MFH messages associated with a Web client service book are processed by the Web client engine **22** and delivered to the Internet **49** by the worker **32** via the simple mail transfer protocol (SMTP) or native outbox. If a user turns on the option to save the sent message to the sent items folder, the direct access proxy will save a copy of the sent message to this folder.

In a Forward/Reply/More function, the user can forward or reply an MTH or MFH message from the mobile wireless communications device **25** as long as the original message still existed in the direct access proxy cache or in user mailbox. For MTH, the worker **32** may send the first 2K, for example, or the whole message (whatever is less) to the user device. If the message is larger than 2K, the user can request MORE to view the next 2K of the message. In this case, the worker **32** will process the More request by retrieving the original message from the user source mailbox, and send back the 2K that the device requests. Of course, in some embodiments more than 2K of message text (or the entire message) may be sent.

In an attachment-viewing function, a user can view a message attachment of a popular document format (e.g., MS Word, MS Power Point, MS Excel, Word Perfect, PDF, text, etc.) or image format (GIF, JPEG, etc). Upon receiving the attachment-viewing request, which is implemented in a form of the More request in this example, the worker **32** can fetch the original message from the user source mailbox via the direct access proxy, extract the requested attachment, process it and send result back to the user device. The processing requires that the original message has not been deleted from the user Web client mailbox.

In the save sent message to sent items folder function, if the user turns this option on, the worker **32** places a copy of each MFH message sent from the user device in the user sent items folder in the mailbox. In over the air folder management, the Web client OTAFM service maintains any messages and folders in the user mailbox synchronized with the user device over the air.

Whenever a message in the user source mailbox is Moved/Deleted, the associated message on the device may also be Moved/Deleted accordingly, and vice-versa. When a message is Moved/Deleted on the device, the associated message in the user Web client mailbox may also be Moved/Deleted accordingly. Similarly, when a folder is Added/Removed/Renamed from the user Web client mailbox, the associated folder on the device may be Added/Removed/Renamed, and vice-versa.

The system **20** may advantageously support different subsets of various messaging features. For example, in the message to handheld function, the mobile office platform **24** may be responsible for connecting to the various source mailboxes **51, 53** to detect new emails. For each new mail, a notification is sent to the Web client engine **22** and, based on this notification, the supervisor **34** chooses one of the workers **32** to process that email. The chosen worker will fetch additional account information and the contents of the mail message from the direct access proxy **40** and deliver it to the user device **25.**

In a message sent from handheld function, the MFH could be given to the direct access proxy **40** from the Web client worker **32.** In turn, the mobile office platform **24** delivers a message to the Internet **49** by sending through a native outbox or sending it via SMTP. It should be understood, however, that the native outbox, whenever possible, may provide a better user experience, especially when taking into account current anti-spam initiatives such as SPF and sender Id.

In a message deleted from handheld function, when a message is deleted from the device **25,** the Web client engine **22** notifies the mobile office platform **24** via the direct access proxy **40.** As such, the mobile office platform **24** can delete the same message on the source mailbox.

When handling More/Forward/Reply/Attachment viewing requests, the Web client worker **32** may request an original mail from the direct access proxy **40.** It will then process the request and send the results to the mobile wireless communications device **25.** The architecture may additionally support on-demand retrieval of message parts and other upgrades, for example.

Upon the integration of a new source mailbox **51, 53,** the service book notification from the alert server **38** may be sent to the supervisor **34,** which assigns this notification to a worker **32** for sending out a service record to the device. Each source mailbox **51, 53** may be associated with a unique service record. In this way, each MFH message is linked with a source mailbox **51, 53** based on the service record on the device.

The system **20** may also poll the integrated external mailboxes periodically to check for new mail and to access any messages. The system **20** may further incorporate optimizations for polling bandwidth from an aggregation component allowing a quick poll. The system **20** can also advantageously support a large active user base and incorporate a rapidly growing user base.

The topology of load balancing can be based on the size of a component's queue and its throughput. These load statistics can be monitored by a mechanism in one example called the UDP Heartbeat, as described before. If a component is overloaded or has a large queue size, the component will have less chance to get an assigned job from other components. In contrast, a component will get more assigned jobs if it completes more jobs in the last few hours than other components. With this mechanism, the load could distribute over heterogeneous machine hardware, i.e., components running on less power machines will be assigned fewer jobs than those on machines with more power hardware.

General load balancing for any mobile office platform components can be accomplished through the use of a load balancer module, for example, a BIG-IP module produced by F5 Networks of Seattle, Washington. BIG-IP can provide load balancing and intelligent layer 7 switching, and can handle traffic routing from the Internet to any customer interfacing components such as the WAP and HTML proxies. The use of a BIG-IP or similar module may provide the application with pooling capabilities, fault tolerance and session management, as will be appreciated by those skilled in the art.

Typically, access to a single-source mailbox **51, 53** can be from a single direct access proxy **40** over a persistent connection. Any requests on behalf of a particular user could persist to the same machine in the same direct access clustered partition. As.certain components are system-wide and will be handling work for users across many partitions, these components can be designed to determine which direct access partition to communicate with on a request-by-request basis.

The load balancer and cache (LBAC) **46** may support this function. The LBAC **46** is a system-wide component that can perform two important functions. The first of these function is that it provides a mapping from the device PIN to a particular direct access proxy **40,** while caching the information in memory for both fast access and to save load on the central database. Secondly, as the direct access proxy **40** will be run in clustered partitions, the LBAC **46** may distribute the load across all direct access proxies within any partition.

The LBAC **46** can be formed of different components. For example, the code which performs the load balancing can be an extended version of a secure mail connector. The code can also perform lookups to the central database and cache the results (LBAC).

In one non-limiting example, when a worker requires that a direct access proxy **40** perform work, it provides the LBAC **46** with a device PIN. The LBAC **46** will discover which partition that PIN is associated with by looking in its cache, or retrieving the partition identifier from a central database (and caching the result). Once the partition is known, the LBAC **46** then consults its cache to see which direct access proxy in that partition has been designated to handle requests for that PIN. If no mapping exists, the LBAC requests the PDS to create a new association on the least loaded DA proxy **40** (again caching the result). Finally, the LBAC **46** responds to the worker **32** with the connection information for the proper direct access proxy to handle that particular request.

The secure mail connector **88** may run in failover pairs, where one is an active master and the other is a secondary standby. Internal data structures may be replicated in real-time from the master to the standby. Multiple LBACs **46** can be run for scalability and fault tolerance, but typically would require an external connection balancing component, such as the BIG-IP component as explained before.

A receiving component in the Web client engine **22** saves the job that has been assigned to it from other components to a job store on the disk before processing. It can update the status of the job and remove the job from the job store when the job processing is completed. In case of component failure or if the process is restarted, it can recover the jobs from the job store and, based on the current statuses of these jobs, continue processing these jobs to the next state, saving the time to reprocess them from the beginning.

Any recovery from the standpoint of MTH/MFH can be achieved through current polling behavior and on the Web client engine **22** recovery mechanisms. From within the mail office platform components, until a message has been successfully delivered to a Web client engine **22,** that message is not recorded in the partition database **60.** During the next polling interval, the system can again "discover" the message and attempt to notify the Web client engine **22.** For new mail events, if an event is lost, the system can pick up that message upon receiving the next event or during the next polling interval. For sources supporting notifications, this interval could be set at six hours, as one non-limiting example. For messages sent from the Web client engine **22,** and for messages that have been accepted by the Web client engine, recovery can be handled by different Web client engine components.

The Web client engine **22** may advantageously be horizontally and vertically scalable. Multiple supervisors **34** can be registered/configured with direct access proxies **40** to provide the distribution of the notification load and the availability of engine service. Multiple workers **32** and port agents **30** can run on the same machine or across multiple machines to distribute load and achieve redundancy. As the number of users grows, new components can be added to the system to achieve high horizontal scalability.

It is possible for a new component to be added to or removed from the system automatically without down time. Traffic can automatically be delegated to a new component and diverted away from failed components. Each component within the mobile office platform **24** can be deployed multiple times to achieve horizontal scalability. To achieve vertical scalability, each mobile office platform **24** component can be a multi-threaded process with a configurable number of threads to scale under heavy load. Pools of connections can be used to reduce the overhead of maintaining too many open connections.

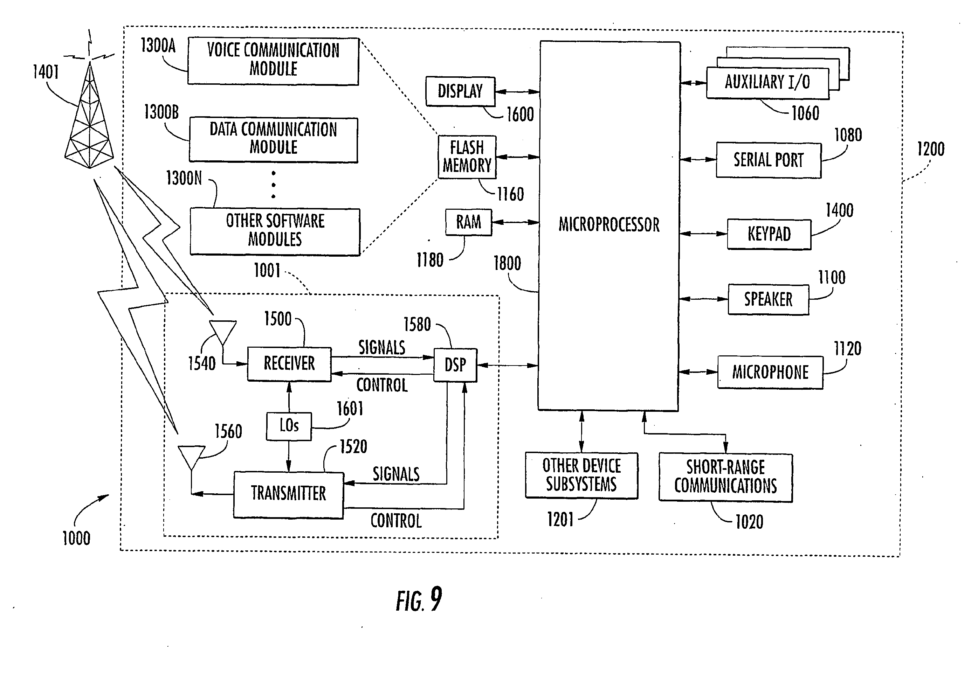

One example of a hand-held mobile wireless communications device **1000** that may be used in accordance the system **20** is further described in the example below with reference to FIG. 9. The device **1000** illustratively includes a housing **1200,** a keypad **1400** and an output device **1600.** The output device shown is a display 1600, which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed but only to the scope of the appended claims.

## Claims

1. A communications system (20) comprising:
a client device (25) for generating email and document retrieval processing jobs; and
a proxy server (40) for communicating asynchronously over the Internet with said client device (25) for processing the email and document retrieval processing jobs;
said client device (25) being configured to post a given one of the email and document retrieval processing jobs to said proxy server (40) with a unique job identifier, ID, but without a response hypertext transfer protocol, HTTP, address, and said proxy server (40) being configured to post job results thereafter for the given one of the email and document retrieval processing jobs to said client device (25) also with the unique job ID to a response HTTP address determined based upon a given type of job from among a plurality of different types of jobs, the plurality of different types of jobs comprising an email processing job, and a document retrieval processing job;
said client device (25) being configured to post at least one other email or document retrieval processing job to said proxy server (40) over the Internet at a time between posting the given email or document retrieval processing job and receiving the job results therefor.

2. The communications system (20) of Claim 1 wherein said client device (25) is configured to generate and post calendar processing jobs to said proxy server (40), and wherein said proxy server (40) is configured to process and post results for the calendar processing jobs to said client device (25).

3. The communications system (20) of Claim 1 wherein said client device (25) is configured to generate and post address book processing jobs to said proxy server (40), and wherein said proxy server (40) is configured to process and post results for the address book processing jobs to said client device (25).

4. The communications system (20) of Claim 1 wherein said client device (25) and said proxy server (40) are configured to communicate asynchronously over the Internet at a physical layer.

5. The communications system (20) of Claim 1 wherein said client device (25) is configured to post the given type of job to said proxy server (40) using a Web Distributed Authoring and Versioning (WebDAV) protocol.

6. The communications system (20) of Claim 1 further comprising at least one wireless handheld communications device configured to cooperate with said client device (25) to generate the plurality of different types of jobs.

7. The communications system (20) of Claim 1 wherein said client device (25) is configured to initiate a first connection with said proxy server (40) to post the given email processing job, and wherein said proxy server (40) is configured to initiate a second connection different than the first connection with said client device (25) for posting the job results for the given type of job.

8. The communications system (20) of Claim 1 wherein said proxy server (40) comprises a queue for storing processing jobs posted by said client device (25) prior to processing.

9. The communications system (20) of Claim 1 wherein said proxy server (40) is configured to send an acknowledgement to said client device (25) upon receiving the posted given processing job, and wherein said client device (25) is configured to send an acknowledgement to said proxy server (40) upon receiving the posted job results for the given processing job.

10. A communications system (20) comprising:
a client device (25) for generating email and calendar processing jobs; and
a proxy server (40) for communicating asynchronously over the Internet with said client device (25) for processing the email and calendar processing jobs;
said client device (25) being configured to post a given email or calendar processing job to said proxy server (40) with a unique job identifier, ID, but without a response hypertext transfer protocol, HTTP, address, and said proxy server (40) being configured to post job results thereafter for the given email or calendar processing jobs to said client device (25) also with the unique job ID to a response HTTP address determined based upon a given type of job from among a plurality of different types of jobs, the plurality of different types of jobs comprising an email processing job, and a calendar processing job;
said client device (25) being configured to post at least one other email or calendar processing job to said proxy server (40) over the Internet at a time between posting the given email or calendar processing job and receiving the job results therefor.

11. The communications system (20) of Claim 10 wherein said client device (25) is configured to generate and post document retrieval processing jobs to said proxy server (40), and wherein said proxy server (40) is configured to process and post results for the document retrieval processing jobs to said client device (25).

12. The communications system (20) of Claim 10 wherein said client device (25) and said proxy server (40) are configured to communicate asynchronously over the Internet at a physical layer.

13. The communications system (20) of Claim 10 wherein said client device (25) is configured to initiate a first connection with said proxy server (40) to post the given email or calendar processing job, and wherein said proxy server (40) is configured to initiate a second connection different than the first connection with said client device (25) for posting the job results for the given email or calendar processing job.

14. A communications system (20) comprising:
a client device (25) for generating email and address book processing jobs; and
a proxy server (40) for communicating asynchronously over the Internet with said client device (25) for processing the email and address book processing jobs;
said client device (25) being configured to post a given email or address book processing job to said proxy server (40) with a unique job identifier, ID, but without a response hypertext transfer protocol, HTTP, address, and said proxy server (40) being configured to post job results thereafter for the given email or address book processing job to said client device (25) also with the unique job ID to a response HTTP address determined based upon a given type of job from among a plurality of different types of jobs, the plurality of different types of jobs comprising an email processing job, and an address book processing job;
said client device (25) being configured to post at least one other email or address book processing job to said proxy server (40) over the Internet at a time between posting the given email or address book processing job and receiving the job results therefor.

15. The communications system (20) of Claim 14 wherein said client device (25) is configured to generate and post document retrieval processing jobs to said proxy server (40), and wherein said proxy server (40) is configured to process and post results for the document retrieval processing jobs to said client device (25).

16. The communications system (20) of Claim 14 wherein said client device (25) and said proxy server (40) are configured to communicate asynchronously over the Internet at a physical layer.

17. The communications system (20) of Claim 14 wherein said client device (25) is configured to initiate a first connection with said proxy server (40) to post the given email processing job, and wherein said proxy server (40) is configured to initiate a second connection different than the first connection with said client device (25) for posting the job results for the given email processing job.

18. A communications method comprising:
generating a given one of an email and document retrieval processing jobs at a client device (25);
posting the given one of the email and document retrieval processing jobs from a client device (25) to a proxy server (40) over the Internet with a unique job identifier, ID, but without a response hypertext transfer protocol, HTTP, address;
processing the given one of the email and document retrieval processing jobs at the proxy server (40) and posting job results for the given one of the email or document retrieval processing jobs to the client device (25) over the Internet also with the unique job ID to a response HTTP address determined based upon a given type of job from among a plurality of different types of jobs, the plurality of different types of jobs comprising an email processing job, and a document retrieval processing job; and
posting at least one other email or document retrieval processing job from the client device (25) to the proxy server (40) over the Internet at a time between posting the given one of the email and document retrieval processing jobs and receiving the job results therefor.

19. The method of Claim 18 further comprising:
generating calendar processing jobs at the client device (25) and posting the calendar processing jobs to the proxy server (40); and
processing the calendar processing jobs at the proxy server (40) and posting results therefor to the client device (25).

20. The method of Claim 18 further comprising:
generating address book processing jobs at the client device (25) and posting the address book processing jobs to the proxy server (40); and
processing the address book processing jobs at the proxy server (40) and posting results therefor to the client device (25).

21. The method of Claim 18 wherein the client device (25) and the proxy server (40) communicate asynchronously over the Internet at a physical layer.

22. The method of Claim 18 wherein posting the given email processing job comprises posting the given type of job to the proxy server (40) using a Web Distributed Authoring and Versioning (WebDAV) protocol.

23. The method of Claim 18 wherein said client device (25) initiates a first connection with said proxy server (40) to post the given type of job, and wherein said proxy server (40) initiates a second connection different than the first connection with said client device (25) for posting the job results for the given type of job.

## Patentansprüche

1. Kommunikationssystem (20), das aufweist:
eine Client-Vorrichtung (25) zum Erzeugen von Email- und Dokument-Abfrage-Verarbeitungsaufträgen; und
einen Proxy-Server (40) zum asynchronen Kommunizieren über das Internet mit der Client-Vorrichtung (25) zum Verarbeiten der Email- und Dokument-Abruf- Verarbeitungsaufträge;
wobei die Client-Vorrichtung (25) konfiguriert ist, einen gegebenen der Email- und Dokument-Abruf-Verarbeitungsaufträge an den Proxy-Server (40) zu übermitteln bzw. zu posten mit einem eindeutigen Auftragsidentifizierer (ID), aber ohne eine Antwort-HTTP(hypertext transfer protocol)-Adresse, und wobei der Proxy-Server (40) konfiguriert ist, danach Auftragsergebnisse für den gegebenen der Email- und Dokument-Abruf-Verarbeitungsaufträge an die Client-Vorrichtung (25) zu übermitteln bzw. zu posten, ebenfalls mit der eindeutigen Auftrags-ID, an eine Antwort-HTTP-Adresse, die bestimmt wird basierend auf einem gegebenen Typ eines Auftrags aus einer Vielzahl von verschiedenen Typen von Aufträgen, wobei die Vielzahl von verschiedenen Typen von Aufträgen einen Email-Verarbeitungsauftrag und einen Dokument-Abruf-Verarbeitungsauftrag aufweisen;
wobei die Client-Vorrichtung (25) konfiguriert ist, zumindest einen anderen Email- oder Dokument-Abruf-Verarbeitungsauftrag an den Proxy-Server (40) zu übermitteln bzw. zu posten über das Internet zu einem Zeitpunkt zwischen einem Übermitteln bzw. Posten des gegebenen Email- oder Dokument-Abruf-Verarbeitungsauftrags und einem Empfangen der Auftragsergebnisse dafür.

2. Kommunikationssystem (20) gemäß Anspruch 1, wobei die Client-Vorrichtung (25) konfiguriert ist, Kalender-Verarbeitungsaufträge zu erzeugen und an den Proxy-Server (40) zu übermitteln und wobei der Proxy-Server (40) konfiguriert ist, die Kalender-Verarbeitungsaufträge zu verarbeiten und Ergebnisse für die Kalender-Verarbeitungsaufträge an die Client-Vorrichtung (25) zu übermitteln.

3. Kommunikationssystem (20) gemäß Anspruch 1, wobei die Client-Vorrichtung (25) konfiguriert ist, Adressbuch-Verarbeitungsaufträge zu erzeugen und an den Proxy-Server (40) zu übermitteln und wobei der Proxy-Server (40) konfiguriert ist, die Adressbuch-Verarbeitungsaufträge zu verarbeiten und Ergebnisse für die die Adressbuch-Verarbeitungsaufträge an die Client-Vorrichtung (25) zu übermitteln.

4. Kommunikationssystem (20) gemäß Anspruch 1, wobei die Client-Vorrichtung (25) und der Proxy-Server (40) konfiguriert sind, asynchron über das Internet auf einer physikalischen Schicht zu kommunizieren.

5. Kommunikationssystem (20) gemäß Anspruch 1, wobei die Client-Vorrichtung (25) konfiguriert ist, den gegebenen Typ von Auftrag an den Proxy-Server (40) zu übermitteln unter Verwendung eines WebDAV(Web Distributed Authoring and Versioning)-Protokolls.

6. Kommunikationssystem (20) gemäß Anspruch 1, das weiter aufweist zumindest eine drahtlose handgehaltene Kommunikationsvorrichtung, die konfiguriert ist, mit der Client-Vorrichtung (25) zu kooperieren, um die Vielzahl von verschiedenen Typen von Aufträgen zu erzeugen.

7. Kommunikationssystem (20) gemäß Anspruch 1, wobei die Client-Vorrichtung (25) konfiguriert ist, eine erste Verbindung mit dem Proxy-Server (40) zu initiieren, um den gegebenen Email-Verarbeitungsauftrag zu übermitteln, und wobei der Proxy-Server (40) konfiguriert ist, eine zweite Verbindung, die von der ersten Verbindung verschieden ist, mit der Client-Vorrichtung (25) zu initiieren zum Übermitteln der Auftragsergebnisse für den gegebenen Auftragstyp.

8. Kommunikationssystem (20) gemäß Anspruch 1, wobei der Proxy-Server (40) eine Warteschlange aufweist zum Speichern von Verarbeitungsaufträgen, die von der Client-Vorrichtung (25) übermittelt werden, vor einer Verarbeitung.

9. Kommunikationssystem (20) gemäß Anspruch 1, wobei der Proxy-Server (40) konfiguriert ist, eine Bestätigung an die Client-Vorrichtung (25) zu senden bei Empfang des übermittelten gegebenen Verarbeitungsauftrags, und wobei die Client-Vorrichtung (25) konfiguriert ist, eine Bestätigung an den Proxy-Server (40) zu senden bei Empfang der übermittelten Auftragsergebnisse für den gegebenen Verarbeitungsauftrag.

10. Kommunikationssystem (20), das aufweist:
eine Client-Vorrichtung (25) zum Erzeugen von Email- und Kalender-Verarbeitungsaufträgen; und
einen Proxy-Server (40) zum asynchronen Kommunizieren über das Internet mit der Client-Vorrichtung (25) zum Verarbeiten der Email- und Kalender-Verarbeitungsaufträge;
wobei die Client-Vorrichtung (25) konfiguriert ist, einen gegebenen Email-oder Kalender-Verarbeitungsauftrag an den Proxy-Server (40) zu übermitteln mit einem eindeutigen Auftragsidentifizierer (ID), aber ohne eine Antwort-HTTP(hypertext transfer protocol)-Adresse, und wobei der Proxy-Server (40) konfiguriert ist, danach Auftragsergebnisse für die gegebenen Email- oder Kalender-Verarbeitungsaufträge an die Client-Vorrichtung (25) zu übermitteln, ebenfalls mit der eindeutigen Auftrags-ID, an eine Antwort-HTTP-Adresse, die bestimmt wird basierend auf einem gegebenen Typ eines Auftrags aus einer Vielzahl von verschiedenen Typen von Aufträgen, wobei die Vielzahl von verschiedenen Typen von Aufträgen einen Email-Verarbeitungsauftrag und einen Kalender-Verarbeitungsauftrag aufweisen;
wobei die Client-Vorrichtung (25) konfiguriert ist, zumindest einen anderen Email- oder Kalender-Verarbeitungsauftrag an den Proxy-Server (40) zu übermitteln über das Internet zu einem Zeitpunkt zwischen einem Übermitteln des gegebenen Email- oder Kalender-Verarbeitungsauftrags und einem Empfangen der Auftragsergebnisse dafür.

11. Kommunikationssystem (20) gemäß Anspruch 10, wobei die Client-Vorrichtung (25) konfiguriert ist, Dokument-Abruf-Verarbeitungsaufträge zu erzeugen und an den Proxy-Server (40) zu übermitteln und wobei der Proxy-Server (40) konfiguriert ist, die Dokument-Abruf-Verarbeitungsaufträge zu verarbeiten und Ergebnisse für die Dokument-Abruf-Verarbeitungsaufträge an die Client-Vorrichtung (25) zu übermitteln.

12. Kommunikationssystem (20) gemäß Anspruch 10, wobei die Client-Vorrichtung (25) und der Proxy-Server (40) konfiguriert sind, asynchron über das Internet auf einer physikalischen Schicht zu kommunizieren.

13. Kommunikationssystem (20) gemäß Anspruch 10, wobei die Client-Vorrichtung (25) konfiguriert ist, eine erste Verbindung mit dem Proxy-Server (40) zu initiieren, um den gegebenen Email- oder Kalender-Verarbeitungsauftrag zu übermitteln, und wobei der Proxy-Server (40) konfiguriert ist, eine zweite Verbindung, die von der ersten Verbindung verschieden ist, mit der Client-Vorrichtung (25) zu initiieren zum Übermitteln der Auftragsergebnisse für den gegebenen Email- oder Kalender-Verarbeitungsauftrag.

14. Kommunikationssystem (20), das aufweist:
eine Client-Vorrichtung (25) zum Erzeugen von Email- und Adressbuch-Verarbeitungsaufträgen; und
einen Proxy-Server (40) zum asynchronen Kommunizieren über das Internet mit der Client-Vorrichtung (25) zum Verarbeiten der Email- und Adressbuch-Verarbeitungsaufträge;
wobei die Client-Vorrichtung (25) konfiguriert ist, einen gegebenen Email-oder Adressbuch-Verarbeitungsauftrag an den Proxy-Server (40) zu übermitteln mit einem eindeutigen Auftragsidentifizierer (ID), aber ohne eine Antwort-HTTP(hypertext transfer protocol)-Adresse, und wobei der Proxy-Server (40) konfiguriert ist, danach Auftragsergebnisse für den gegebenen Email- oder Adressbuch-Verarbeitungsauftrag an die Client-Vorrichtung (25) zu übermitteln, ebenfalls mit der eindeutigen Auftrags-ID, an eine Antwort-HTTP-Adresse, die bestimmt wird basierend auf einem gegebenen Typ eines Auftrags aus einer Vielzahl von verschiedenen Typen von Aufträgen, wobei die Vielzahl von verschiedenen Typen von Aufträgen einen Email-Verarbeitungsauftrag und einen Adressbuch-Verarbeitungsauftrag aufweisen;
wobei die Client-Vorrichtung (25) konfiguriert ist, zumindest einen anderen Email- oder Adressbuch-Verarbeitungsauftrag an den Proxy-Server (40) zu übermitteln über das Internet zu einem Zeitpunkt zwischen einem Übermitteln des gegebenen Email- oder Adressbuch-Verarbeitungsauftrags und einem Empfangen der Auftragsergebnisse dafür.

15. Kommunikationssystem (20) gemäß Anspruch 14, wobei die Client-Vorrichtung (25) konfiguriert ist, Dokument-Abruf-Verarbeitungsaufträge zu erzeugen und an den Proxy-Server (40) zu übermitteln und wobei der Proxy-Server (40) konfiguriert ist, die Dokument-Abruf-Verarbeitungsaufträge zu verarbeiten und Ergebnisse für die Dokument-Abruf-Verarbeitungsaufträge an die Client-Vorrichtung (25) zu übermitteln.

16. Kommunikationssystem (20) gemäß Anspruch 14, wobei die Client-Vorrichtung (25) und der Proxy-Server (40) konfiguriert sind, asynchron über das Internet auf einer physikalischen Schicht zu kommunizieren.

17. Kommunikationssystem (20) gemäß Anspruch 14, wobei die Client-Vorrichtung (25) konfiguriert ist, eine erste Verbindung mit dem Proxy-Server (40) zu initiieren, um den gegebenen Email-Verarbeitungsauftrag zu übermitteln, und wobei der Proxy-Server (40) konfiguriert ist, eine zweite Verbindung, die von der ersten Verbindung verschieden ist, mit der Client-Vorrichtung (25) zu initiieren zum Übermitteln der Auftragsergebnisse für den gegebenen Email-Verarbeitungsauftrag.

18. Kommunikationsverfahren, das aufweist:
Erzeugen eines gegebenen aus Email- und Dokument-Abfrage-Verarbeitungsaufträgen an einer Client-Vorrichtung (25);
Übermitteln des gegebenen der Email- und Dokument-Abruf-Verarbeitungsaufträge von einer Client-Vorrichtung (25) an einen Proxy-Server (40) über das Internet mit einem eindeutigen Auftragsidentifizierer (ID), aber ohne eine Antwort-HTTP(hypertext transfer protocol)-Adresse;
Verarbeiten des gegebenen der Email- und Dokument-Abruf-Verarbeitungsaufträge an dem Proxy-Server (40) und Übermitteln von Auftragsergebnissen für den gegebenen der Email- und Dokument-Abruf-Verarbeitungsaufträge an die Client-Vorrichtung (25) über das Internet, ebenfalls mit der eindeutigen Auftrags-ID, an eine Antwort-HTTP-Adresse, die bestimmt wird basierend auf einem gegebenen Typ eines Auftrags aus einer Vielzahl von verschiedenen Typen von Aufträgen, wobei die Vielzahl von verschiedenen Typen von Aufträgen einen Email-Verarbeitungsauftrag und einen Dokument-Abruf-Verarbeitungsauftrag aufweisen; und Übermitteln zumindest einen anderen Email- oder Dokument-Abruf-Verarbeitungsauftrag von der Client-Vorrichtung (25) an den Proxy-Server (40) über das Internet zu einem Zeitpunkt zwischen einem Übermitteln des gegebenen der Email- oder Dokument-Abruf-Verarbeitungsaufträge und einem Empfangen der Auftragsergebnisse dafür.

19. Verfahren gemäß Anspruch 18, das weiter aufweist:
Erzeugen von Kalender-Verarbeitungsaufträgen an der Client-Vorrichtung (25) und Übermitteln der Kalender-Verarbeitungsaufträge an den Proxy-Server (40); und
Verarbeiten der Kalender-Verarbeitungsaufträge an dem Proxy-Server (40) und Übermitteln von Ergebnissen dafür an die Client-Vorrichtung (25).

20. Verfahren gemäß Anspruch 18, das weiter aufweist:
Erzeugen von Adressbuch-Verarbeitungsaufträgen an der Client-Vorrichtung (25) und Übermitteln der Adressbuch-Verarbeitungsaufträge an den Proxy-Server (40); und
Verarbeiten der Adressbuch-Verarbeitungsaufträge an dem Proxy-Server (40) und Übermitteln von Ergebnissen dafür an die Client-Vorrichtung (25).

21. Verfahren gemäß Anspruch 18, wobei die Client-Vorrichtung (25) und der Proxy-Server (40) asynchron über das Internet auf einer physikalischen Schicht kommunizieren.

22. Verfahren gemäß Anspruch 18, wobei ein Übermitteln des gegebenen Email-Verarbeitungsauftrags aufweist ein Übermitteln des gegebenen Auftragstyps an den Proxy-Server (40) unter Verwendung eines WebDAV(Web Distributed Authoring and Versioning)-Protokolls.

23. Verfahren gemäß Anspruch 18, wobei die Client-Vorrichtung (25) eine erste Verbindung mit dem Proxy-Server (40) initiiert, um den gegebenen Auftragstyp zu übermitteln, und wobei der Proxy-Server (40) eine zweite Verbindung, die von der ersten Verbindung verschieden ist, mit der Client-Vorrichtung (25) initiiert zum Übermitteln der Auftragsergebnisse für den gegebenen Auftragstyp.

## Revendications

1. Système de communication (20), comprenant :
un dispositif client (25), destiné à produire des travaux de traitement de courriels et de recherche de documents ; et
un serveur mandataire (40), destiné à communiquer de manière asynchrone via l'internet avec ledit dispositif client (25), afin de traiter les travaux de traitement de courriels et de recherche de documents ;
ledit dispositif client (25) étant configuré pour envoyer audit serveur mandataire (40) un travail considéré parmi les travaux de traitement de courriels et de recherche de documents, avec un identificateur unique de travail mais sans une adresse du protocole de transfert hypertextuel, HTTP pour « *Hyper Text Transfer Protocol* », de réponse ; et ledit serveur mandataire (40) étant configuré pour envoyer ensuite les résultats au dispositif client (25), pour le travail considéré parmi les travaux de traitement de courriels et de recherche de documents, également avec l'identificateur unique de travail, à une adresse HTTP de réponse déterminée en fonction d'un type considéré de travail parmi une pluralité de différents types de travaux, la pluralité de différents types de travaux comprenant un travail de traitement de courriels et un travail de traitement de recherche de document ;
ledit dispositif client (25) étant configuré pour envoyer sur l'internet audit serveur mandataire (40) au moins un autre travail de traitement de courriels ou de recherche de documents à un instant situé entre l'envoi dudit travail de traitement de courriels ou de recherche de documents considéré et la réception des résultats du travail pour ce dernier.

2. Système de communication (20) selon la revendication 1, dans lequel ledit dispositif client (25) est configuré pour produire et envoyer des travaux de traitement d'agenda audit serveur mandataire (40), et dans lequel ledit serveur mandataire (40) est configuré pour traiter les travaux de traitement d'agenda et envoyer les résultats audit dispositif client (25).

3. Système de communication (20) selon la revendication 1, dans lequel ledit dispositif client (25) est configuré pour produire et envoyer des travaux de traitement de carnet d'adresses audit serveur mandataire (40), et dans lequel ledit serveur mandataire (40) est configuré pour traiter les travaux de traitement de carnet d'adresses et envoyer les résultats audit dispositif client (25).

4. Système de communication (20) selon la revendication 1, dans lequel ledit dispositif client (25) et ledit serveur mandataire (40) sont configurés pour communiquer de manière asynchrone sur l'internet au niveau d'une couche physique.

5. Système de communication (20) selon la revendication 1, dans lequel ledit dispositif client (25) est configuré pour envoyer le type considéré de travail audit serveur mandataire (40) en utilisant un protocole WebDAV (pour « *Web Distributed Authoring and Versioning* » - Protocole de gestion distribuée de versions et d'écriture sur le web).

6. Système de communication (20) selon la revendication 1, comprenant en outre au moins un dispositif de communication sans fil portatif configuré pour coopérer avec ledit dispositif client (25) afin de produire la pluralité de différents types de travaux.

7. Système de communication (20) selon la revendication 1, dans lequel ledit dispositif client (25) est configuré pour lancer une première connexion avec ledit serveur mandataire (40) pour envoyer le travail de traitement de courriels, et dans lequel ledit serveur mandataire (40) est configuré pour lancer une seconde connexion avec ledit dispositif client (25), différente de la première connexion, pour envoyer les résultats du travail, pour le type considéré de travail.

8. Système de communication (20) selon la revendication 1, dans lequel ledit serveur mandataire (40) comprend une file d'attente pour stocker les travaux de traitement envoyés par ledit dispositif client (25) avant leur traitement.

9. Système de communication (20) selon la revendication 1, dans lequel ledit serveur mandataire (40) est configuré pour envoyer un accusé de réception audit dispositif client (25) après réception du travail de traitement considéré envoyé, et dans lequel ledit dispositif client (25) est configuré pour envoyer un accusé de réception audit serveur mandataire (40) après réception des résultats envoyés pour le travail de traitement considéré.

10. Système de communication (20), comprenant :
un dispositif client (25), destiné à produire des travaux de traitement de courriels et d'agenda ; et
un serveur mandataire (40), destiné à communiquer de manière asynchrone via l'internet avec ledit dispositif client (25), afin de traiter les travaux de traitement de courriels et d'agenda ;
ledit dispositif client (25) étant configuré pour envoyer audit serveur mandataire (40) un travail considéré de traitement de courriels ou d'agenda avec un identificateur unique de travail mais sans une adresse HTTP de réponse ; et ledit serveur mandataire (40) étant configuré pour envoyer ensuite au dispositif client (25) les résultats pour les travaux de traitement de courriels ou d'agenda considérés, également avec l'identificateur unique de travail, à une adresse HTTP de réponse déterminée en fonction d'un type considéré de travail parmi une pluralité de différents types de travaux, la pluralité de différents types de travaux comprenant un travail de traitement de courriels et un travail de traitement d'agenda ;
ledit dispositif client (25) étant configuré pour envoyer sur l'internet audit serveur mandataire (40) au moins un autre travail de traitement de courriels ou d'agenda à un instant situé entre l'envoi dudit travail de traitement de courriels ou d'agenda considéré et la réception des résultats du travail pour ce dernier.

11. Système de communication (20) selon la revendication 10, dans lequel ledit dispositif client (25) est configuré pour produire et envoyer des travaux de traitement de recherche de documents audit serveur mandataire (40), et dans lequel ledit serveur mandataire (40) est configuré pour traiter les travaux de traitement de recherche de documents et envoyer les résultats audit dispositif client (25).

12. Système de communication (20) selon la revendication 10, dans lequel ledit dispositif client (25) et ledit serveur mandataire (40) sont configurés pour communiquer de manière asynchrone sur l'internet au niveau d'une couche physique.

13. Système de communication (20) selon la revendication 10, dans lequel ledit dispositif client (25) est configuré pour lancer une première connexion avec ledit serveur mandataire (40) pour envoyer le travail de traitement de courriels ou d'agenda, et dans lequel ledit serveur mandataire (40) est configuré pour lancer une seconde connexion avec ledit dispositif client (25), différente de la première connexion, pour envoyer les résultats du travail considéré de traitement de courriels ou d'agenda.

14. Système de communication (20), comprenant :
un dispositif client (25), destiné à produire des travaux de traitement de courriels et de carnet d'adresses ; et
un serveur mandataire (40), destiné à communiquer de manière asynchrone via l'internet avec ledit dispositif client (25), afin de traiter les travaux de traitement de courriels et de carnet d'adresses ;
ledit dispositif client (25) étant configuré pour envoyer audit serveur mandataire (40) un travail considéré de traitement de courriels ou de carnet d'adresses avec un identificateur unique de travail mais sans une adresse HTTP de réponse ; et ledit serveur mandataire (40) étant configuré pour envoyer ensuite au dispositif client (25) les résultats pour les travaux de traitement de courriels ou de carnet d'adresses considérés, également avec l'identificateur unique de travail, à une adresse HTTP de réponse déterminée en fonction d'un type considéré de travail parmi une pluralité de différents types de travaux, la pluralité de différents types de travaux comprenant un travail de traitement de courriels et un travail de traitement de carnet d'adresses ;
ledit dispositif client (25) étant configuré pour envoyer sur l'internet audit serveur mandataire (40) au moins un autre travail de traitement de courriels ou de carnet d'adresses à un instant situé entre l'envoi dudit travail de traitement de courriels ou de carnet d'adresses considéré et la réception des résultats du travail pour ce dernier.

15. Système de communication (20) selon la revendication 14, dans lequel ledit dispositif client (25) est configuré pour produire et envoyer des travaux de traitement de recherche de documents audit serveur mandataire (40), et dans lequel ledit serveur mandataire (40) est configuré pour traiter les travaux de traitement de recherche de documents et envoyer les résultats audit dispositif client (25).

16. Système de communication (20) selon la revendication 14, dans lequel ledit dispositif client (25) et ledit serveur mandataire (40) sont configurés pour communiquer de manière asynchrone sur l'internet au niveau d'une couche physique.

17. Système de communication (20) selon la revendication 14, dans lequel ledit dispositif client (25) est configuré pour lancer une première connexion avec ledit serveur mandataire (40) pour envoyer le travail de traitement de courriels considéré, et dans lequel ledit serveur mandataire (40) est configuré pour lancer une seconde connexion avec ledit dispositif client (25), différente de la première connexion, pour envoyer les résultats du travail considéré de traitement de courriels.

18. Procédé de communication comprenant les étapes consistant à :
produire un travail considéré, parmi des travaux de traitement de courriels et de recherche de documents, sur un dispositif client (25) ; et
envoyer à un serveur mandataire (40) par le dispositif client (25) sur l'internet le travail considéré parmi les travaux de traitement de courriels et de recherche de documents, avec un identificateur unique de travail mais sans une adresse HTTP de réponse ; et
traiter sur le serveur mandataire (40) le travail considéré parmi les travaux de traitement de courriels et de recherche de documents et envoyer sur l'internet les résultats au dispositif client (25), pour le travail considéré parmi les travaux de traitement de courriels ou de recherche de documents, également avec l'identificateur unique de travail, à une adresse HTTP de réponse déterminée en fonction d'un type considéré de travail parmi une pluralité de différents types de travaux, la pluralité de différents types de travaux comprenant un travail de traitement de courriels et un travail de traitement de recherche de document ; et
envoyer audit serveur mandataire (40) par le dispositif client (25), sur l'internet, au moins un autre travail de traitement de courriels ou de recherche de documents à un instant situé entre l'envoi dudit travail considéré parmi les travaux de traitement de courriels et de recherche de documents et la réception des résultats du travail pour ce dernier.

19. Procédé selon la revendication 18, comprenant en outre les étapes consistant à :
produire des travaux de traitement d'agenda sur le dispositif client (25) et envoyer les travaux de traitement d'agenda au serveur mandataire (40) ; et
traiter les travaux de traitement d'agenda sur le serveur mandataire (40) et envoyer des résultats pour ceux-ci au dispositif client (25).

20. Procédé selon la revendication 18, comprenant en outre les étapes consistant à :
produire des travaux de traitement de carnet d'adresses sur le dispositif client (25) et envoyer les travaux de traitement de carnet d'adresses au serveur mandataire (40) ; et
traiter les travaux de traitement de carnet d'adresses sur le serveur mandataire (40) et envoyer des résultats pour ceux-ci au dispositif client (25).

21. Procédé selon la revendication 18, dans lequel ledit dispositif client (25) et ledit serveur mandataire (40) communiquent de manière asynchrone sur l'internet au niveau d'une couche physique.

22. Procédé selon la revendication 18, dans lequel l'envoi du travail de traitement de courriels considéré comprend l'envoi du type considéré de travail audit serveur mandataire (40) en utilisant un protocole WebDAV (pour *« Web Distributed Authoring and Versioning* » - Protocole de gestion distribuée de versions et d'écriture sur le web).

23. Procédé selon la revendication 18, dans lequel ledit dispositif client (25) lance une première connexion avec ledit serveur mandataire (40) pour envoyer le type de travail considéré, et dans lequel ledit serveur mandataire (40) lance une seconde connexion avec ledit dispositif client (25), différente de la première connexion, pour envoyer les résultats du travail, pour le type considéré de travail.
